# EUROPEAN PATENT APPLICATION

(11) **EP 0 985 939 A1**
(43) Date of publication of application: **15.03.2000**
(21) Application number: 98307290.1
(22) Date of filing: 09.09.1998
(51) Int. Cl.: G01T 1/24, G01R 33/035, H01L 39/22

(54) **Particle sensor**

(71) Applicant: OXFORD INSTRUMENTS (UK) LIMITED, Eynsham, Witney, Oxon OX8 1TL (GB)
(72) Inventor: Polushkin, Vladimir, Cambridge, Cams CB4 3PB (GB)
(74) Representative: Skone James, Robert Edmund

(57) **Abstract**

A particle sensor comprising a detector (1,1') which generates a detector output signal in response to an incident particle. A SQUID (8,8') is coupled to the detector whereby the SQUID generates a SQUID output signal on a SQUID output line (9) in response to the detector output signal. Storage means (13,13',34) is provided for storing the SQUID output signal or a signal derived therefrom. A switch (11,11') is provided having an ON state in which the switch couples the SQUID output line to the storage means, and an OFF state in which the switch decouples the SQUID output line from the storage means.

## Description

The present invention relates to a particle sensor comprising a detector for detecting incident particles such as photons, phonons, ions, atoms etc. The sensor can be used in a variety of applications, including astronomy, X-ray and optical spectroscopy, remote sensing and mass spectrometry.

In conventional particle detectors it is necessary to maintain the detector at a desired operating point by either voltage or current biassing the detector. The signal from the detector is then read out by a suitable read-out system. However a problem with conventional read-out systems is that switches in the read-out system can cause parasitic charge injection into the detector which causes the detector to drift away from the desired operating point.

In accordance with a first aspect of the present invention there is provided a particle sensor comprising a detector which generates a detector output signal in response to an incident particle; a SQUID coupled to the detector whereby the SQUID generates a SQUID output signal on a SQUID output line in response to the detector output signal; storage means for storing the SQUID output signal or a signal derived therefrom; and a switch having an ON state in which the switch couples the SQUID output line to the storage means, and an OFF state in which the switch decouples the SQUID output line from the storage means.

In accordance with a second aspect of the present invention there is provided a method of operating a particle sensor, the method comprising generating a detector output signal in response to an incident particle; generating a SQUID output signal on a SQUID output line in response to the detector output signal; storing the SQUID output signal or a signal derived therefrom on storage means; switching a switch into an ON state in which the switch couples the SQUID output line to the storage means, and switching the switch into an OFF state in which the switch decouples the SQUID output line from the storage means.

By providing a SQUID (superconducting quantum interference device) between the switch and the detector, the detector is galvanically decoupled from the switch. This reduces the problem of parasitic charge injection. Conveniently the SQUID also presents a lower impedance to the storage means.

The SQUID output line may be coupled indirectly to storage means comprising a RAM memory which is updated via a CPU. However preferably the storage means comprises a sample-and-hold circuit.

The switch may comprise a mechanical relay but preferably comprises an FET switch.

In one embodiment the switch may comprise a single switching element (eg a CMOS switch) which selectively couples the SQUID output line to the storage means. In a second embodiment the switch comprises a demultiplexer for sequentially coupling the SQUID output line to a plurality of output lines. In a third embodiment a plurality of detectors are each coupled to a respective SQUID, and the switch comprises a multiplexer for sequentially coupling the SQUID output lines to a common output line.

The detector is preferably voltage biassed. The advantages of voltage biassing are discussed in US-A-5641961.

The detector may comprise bolometer detector but preferably the detector comprise a superconducting detector such as transition edge detector or superconducting tunnel junction (STJ) detector (e.g. an NIS or SIS junction detector).

Preferably means are provided for cooling the or each detector. In this case the SQUID provides the further advantage of isolating the detector from thermal parasitic signals. Optionally the switch and/or the storage means may also be cooled. Preferably cryogenic cooling is provided to 4.2K or below.

A number of embodiments of the present invention will now be described with reference to the accompanying drawings, in which:
Figure 1 illustrates a detector and read-out circuit;
Figure 2 illustrates the IV curve of the detector;
Figure 3 is a schematic diagram of a sensor incorporating the circuitry of Figure 1;
Figure 4 illustrates a demultiplexing read-out circuit;
Figure 5 is a schematic diagram of a sensor incorporating the circuitry of Figure 4; and
Figure 6 illustrates a multiplexing read-out circuit.

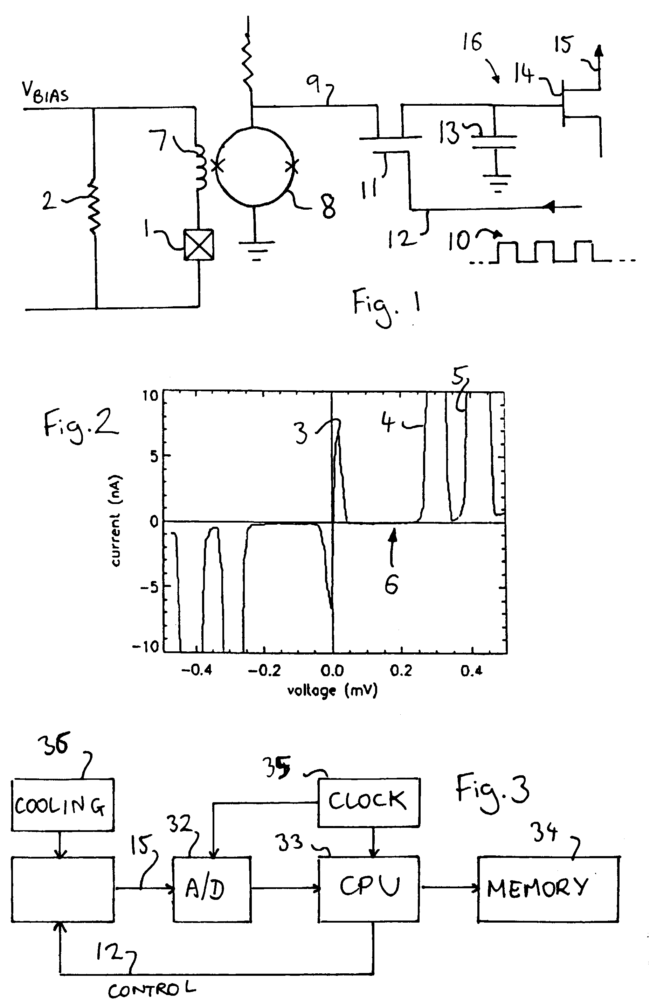

Referring to Figure 1, a tantalum superconducting-tunnel-junction (STJ) detector 1 is voltage biassed by applying a constant voltage V_{BIAS} across the detector 1 and a parallel resistor 2. The resistor 2 is chosen to have a much lower resistance than the expected resistance values of the detector 1. In one example resistor 2 has a resistance of 20 micro-ohms and the detector 1 has an expected resistance of 10⁶ ohm. Alternatively the detector 1 may be voltage biassed by applying a constant current I_{BIAS} through a shunt resistor (not shown) in series with the detector 1. In this case the shunt resistor is chosen with a resistance value much greater than the expected resistance values of the detector 1.

The typical IV curve of the tantalum tunnel junction in detector 1 is shown in Figure 2. The curve was recorded at a temperature of 0.30K. The curve has a peak 3 resulting from residual unsuppressed Josephson oscillation and a pair of Fiske steps 4,5 (the upper parts of the Fiske steps 4,5 being omitted in Figure 2). The voltage bias V_{BIAS} aims to maintain the detector 1 at a working point 6 in the region of 0.2mV. Any deviation into the peaks 3,4 results in degraded operation.

Returning to Figure 1, a read-out inductor 7 couples with a read-out SQUID 8 which pre-amplifies the detector output signal from the detector 1 to produce a pre-amplified SQUID output signal on SQUID output line 9. A CMOS semiconductor switch 11 is operated by a switching signal 10 on a switching line 12. When the switch 13 is ON, the pre-amplified SQUID output signal on SQUID output line 9 is fed to the sample-and-hold circuit 16 which comprises a capacitor 13 and transistor 14. The SQUID output signal charges the capacitor 13, which has a capacitance chosen so that it charges up during the ON period. When the switch 13 is turned OFF, the capacitor 13 retains its charge due to the high impedance of the switch 11 and output transistor 14. The output transistor generates an amplified output on transistor output line 15. When the switch 11 is turned ON again, it charges up or down in accordance with the new voltage on SQUID output line 8.

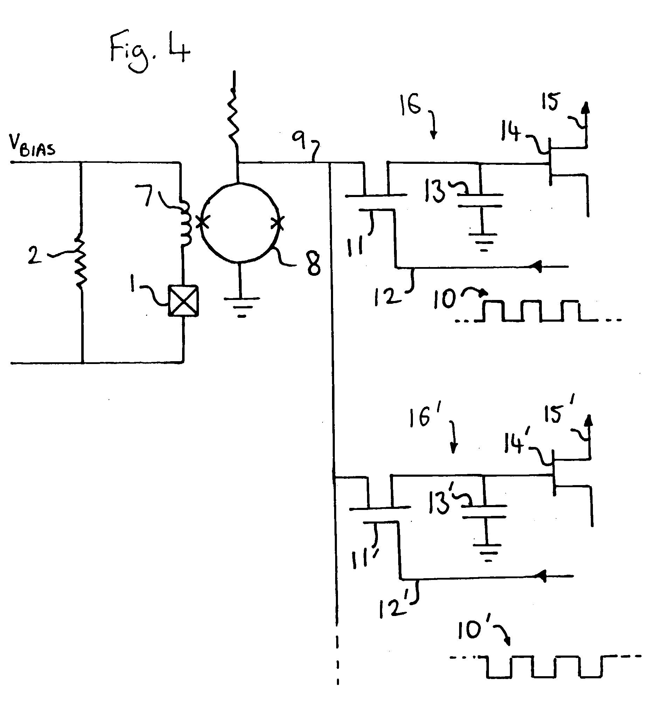

As shown schematically in Figure 3, the transistor output line 15 is coupled to an analogue-to-digital converter (ADC) 32. The ADC 32 inputs a digital signal to a central processing unit (CPU) 33 which stores the successive digital output values in a RAM memory 34. The ADC 32 and CPU 33 share a common clock 35.

The detector 1, SQUID 8 and sample-and-hold circuit 16 are cooled to 4.2K or below by a cryogenic cooling system 36. The rest of the processing electronics is operated at room temperature.

In the alternative arrangement of Figure 4 the same reference numerals are used for the same components as in Figure 1. In Figure 4 the pre-amplified SQUID output signal on line 9 is demultiplexed in parallel to a number of sample-and-hold circuits 16' etc. For illustrative purposes only two sample-and-hold circuits are shown but in general there may be more than two. By operating the switches 11,11' sequentially, the switches 11,11' act as a demultiplexer which feeds the SQUID output signals sequentially to the parallel sample-and-hold circuits 16,16'.

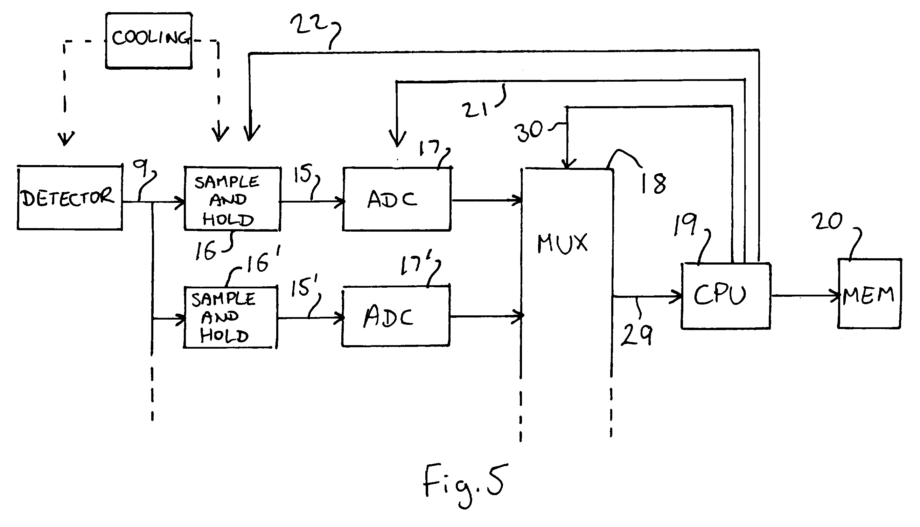

As shown schematically in Figure 5 (in which the switches 11,11' are omitted for clarity) the parallel transistor output lines 15,15' etc are coupled to respective analogue-to-digital converters (ADC) 17,17' etc which input their digital signals to a multiplexer 18. The digital signals are multiplexed and output on a common output line 29 to a central processing unit (CPU) 19 which stores the successive digital output values in a memory 20. The CPU 19 synchronously operates the switches 11,11', ADCs 17,17'and multiplexer 18 via respective control paths indicated schematically at 21,22 and 30. As the ADC 17 is processing the latest value on output line 15, the ADC 17' is ready to receive the next value on output line 15'. In this way, the system of Figures 4 and 5 has a greater read-out frequency than the system of Figures 1 and 3.

The detector 1, SQUID 8 and sample-and-hold circuits 16,16' are cooled to 4.2K or below by a cryogenic cooling system 17. Items 17,17',18,19 and 20 are operated at room temperature.

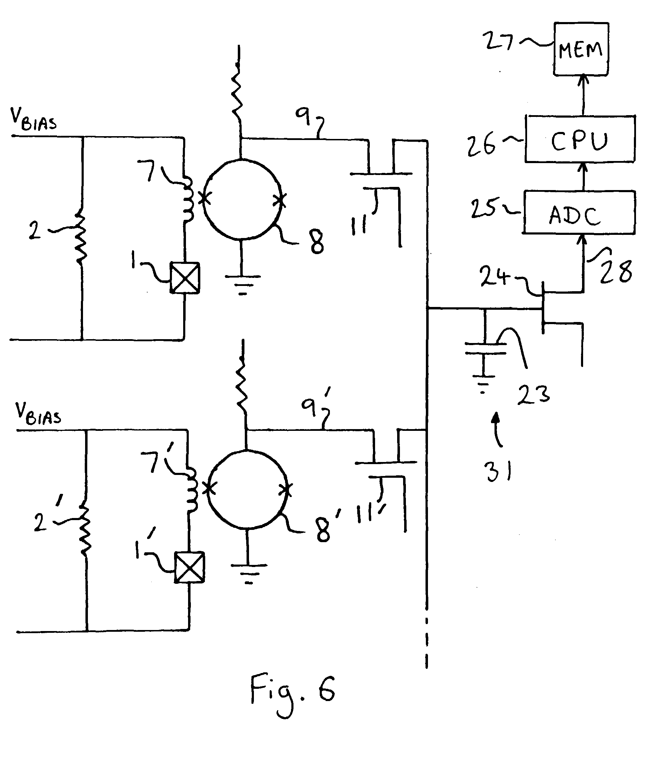

In the alternative system of Figure 6, an array of detectors 1,1' etc is provided (typically in the form of a square array for position-sensitive detection). Each SQUID output line 9,9' is fed to a respective CMOS semiconductor switch 11,11' etc. The switches 11,11' are operated sequentially so as to multiplex the SQUID output signals on lines 9,9'. The multiplexed SQUID output signals are fed sequentially to a common sample-and-hold circuit 31 comprising a capacitor 23 and transistor 24. The output from transistor 24 is digitised by ADC 25, fed to CPU 26 and stored in memory 27.

All components in Figure 6 are cooled to 4.2K or below, apart from the PLC 25, CPU 26 and memory 27. It should be noted that the system of Figure 6 only has a single room temperature output line 28, which is advantageous.

The following comments apply to the circuit of Figures 1,4 and 6.

The SQUID(s) 8,8' galvanically decouple the switch(es) 11,11' from the detector(s) 1,1', thus minimising parasitic charge injection into the detector(s) 1,1'.

The SQUID(s) 8,8' also provide impedance transformation. Suppose we couple the switches 11,11' directly to the detector(s) 1,1'. The time constant to recharge the capacitor(s) 13,13',23 would then be R_{d}C (where R_{d} is the resistance of the detector(s) 1,1' which is typically of the order of 10⁶ ohm, and C is the capacitance of the capacitor(s) 13,13',23). In contrast the SQUID(s) 8,8' drop the time constant to RₛC (where Rₛ id the resistance of the SQUID(s) 8,8' which is typically of the order of 2.5 ohm).

The circuits are very fast because they do not require a feedback system to maintain the detector(s) at the desired operating point 6.

In addition there is no direct galvanic connection between the SQUID(s) 8,8' and the detector(s) 1,1'. This minimises heat flow between the SQUID(s) 8,8' and the detector(s) 1,1'.

In order to suppress Josephson oscillation a coil (not shown) is provided to apply a 10G magnetic field to the detector(s) 1,1'. Suitable screening (also not shown) is also provided to screen the SQUID(s) 8,8' from this magnetic field.

In an alternative system (not shown), an additional SQUID pre-amplification stage is provided between the or each detector 1,1' etc and the or each sample-and-hold circuit 16,16' etc. This increases the output voltage.

In an alternative arrangement the capacitors 13,13',23 are omitted - ie. the SQUID output signal is fed directly to the transistors 14,14',24 etc.

In a further alternative system (not shown) a rapid-single-flux-quantum-logic (RSFQ) processing system may be used to implement the ADCs, CPU and memory. THE RSFQ processing system can then be cooled at or below 4.2K, bringing significant increases in speed and signal-to-noise ratio.

## Claims

1. A particle sensor comprising a detector which generates a detector output signal in response to an incident particle; a SQUID coupled to the detector whereby the SQUID generates a SQUID output signal on a SQUID output line in response to the detector output signal; storage means for storing the SQUID output signal or a signal derived therefrom; and a switch having an ON state in which the switch couples the SQUID output line to the storage means, and an OFF state in which the switch decouples the SQUID output line from the storage means.

2. A sensor according to claim 1 wherein the storage means comprises a sample-and-hold circuit.

3. A sensor according to claim 1 or 2 wherein the switch comprises an FET switch.

4. A sensor according to any of the preceding claims wherein the switch comprises a demultiplexer for sequentially coupling the SQUID output line to a plurality of output lines.

5. A sensor according to any of claims 1 to 3 comprising a plurality of detectors each coupled to a respective SQUID, and wherein the switch comprises a multiplexer for sequentially coupling the SQUID output lines to a common output line.

6. A sensor according to any of the preceding claims further comprising voltage bias means for voltage biassing the or each detector.

7. A sensor according to any of the preceding claims wherein the or each detector comprises a superconducting detector.

8. A sensor according to claim 7 wherein the or each superconducting detector comprises a transition-edge detector or superconducting-tunnel-junction detector.

9. A sensor according to any of the preceding claims further comprising means for cooling the or each detector.

10. A sensor according to any of the preceding claims further comprising means for cooling the switch.

11. A sensor according to any of the preceding claims further comprising means for cooling the storage means.

12. A sensor according to any of claims 9 to 11 wherein the detector(s), switch and/or storage means is cooled to 4.2K or below.

13. A method of operating a particle sensor, the method comprising generating a detector output signal in response to an incident particle; generating a SQUID output signal on a SQUID output line in response to the detector output signal; storing the SQUID output signal or a signal derived therefrom on storage means; switching a switch into an ON state in which the switch couples the SQUID output line to the storage means, and switching the switch into an OFF state in which the switch decouples the SQUID output line from the storage means.
